(19) Europäisches Patentamt
European Patent Office
Office européen des brevets

(11) **EP 4 611 445 A1**

(12) **EUROPEAN PATENT APPLICATION**
published in accordance with Art. 153(4) EPC

(43) Date of publication:
**03.09.2025 Bulletin 2025/36**

(21) Application number: **23887606.4**

(22) Date of filing: **01.09.2023**

(51) International Patent Classification (IPC):
**H04W 56/00** (2009.01)     **H04W 72/566** (2023.01)

(52) Cooperative Patent Classification (CPC):
**H04W 4/44; H04W 4/46; H04W 16/28; H04W 56/00;
H04W 72/12; H04W 72/1263; H04W 72/566**

(86) International application number:
**PCT/CN2023/116389**

(87) International publication number:
**WO 2024/098912 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.11.2022 CN 202211405434**

(71) Applicant: **Huawei Technologies Co., Ltd.
Shenzhen, Guangdong 518129 (CN)**

(72) Inventors:
• **ZHANG, Yi
Shenzhen, Guangdong 518129 (CN)**
• **XIANG, Zhengzheng
Shenzhen, Guangdong 518129 (CN)**
• **SU, Hongjia
Shenzhen, Guangdong 518129 (CN)**
• **LU, Lei
Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **COMMUNICATION METHOD, TERMINAL DEVICE, AND COMMUNICATION SYSTEM**

(57) This application discloses a communication method and a terminal device, which may be applied to D2D, vehicle-to-everything V2X, or the like, or may be applied to the field of intelligent driving, intelligent connected vehicles, internet of things, or the like. The method includes: A first terminal device receives a second synchronization signal. When determining that a priority of a first synchronization signal is higher than a priority of the second synchronization signal, the first terminal device, as a transmit end, sends a synchronization signal for beam training, so that sidelink beam training is implemented on a sidelink.

FIG. 2

**Description**

This application claims priority to Chinese Patent Application No. CN202211405434.0, filed with the China National Intellectual Property Administration on November 10, 2022 and entitled "COMMUNICATION METHOD, TERMINAL DEVICE, AND COMMUNICATION SYSTEM", which is incorporated herein by reference in its entirety.

## TECHNICAL FIELD

This application relates to the field of communication technologies, and in particular, to a communication method, a terminal device, and a communication system.

## BACKGROUND

Vehicle-to-everything (vehicle-to-everything, V2X) communication is a type of sidelink (sidelink, SL) communication, and is communication between a vehicle and any external object. In a 5th generation mobile communication technology (the 5th generation, 5G) new radio (new radio, NR) system, the V2X communication mainly has two transmission modes: One is a base station allocation mode, namely, a mode 1 (mode 1), and the other is a user autonomous-selection mode, namely, a mode 2 (mode 2). The user autonomous-selection mode may be mainly applied to V2X communication without network coverage.

Beam management is an important technology proposed by the 5G NR for FR (frequency range) 2, and is a process in which a base station and a terminal device obtain and maintain a beam set for sending and receiving. The beam management includes two important functions: beam training and beam failure recovery. The beam training includes transmit beam training and receive beam training.

In the mode 1, a network device coordinates and schedules terminal devices together to perform beam training. However, in the mode 2, because no network device participates in scheduling, beam training between terminal devices cannot be implemented.

## SUMMARY

This application provides a communication method, to implement beam training between terminal devices on a sidelink.

A first aspect of this application provides a communication method, including: A first terminal device receives at least one second synchronization signal, where the second synchronization signal is information that is sent by a second terminal device and that is used for beam training, the second synchronization signal includes a second synchronization signal identifier, and the second synchronization signal identifier indicates a priority of the second synchronization signal. The first terminal device determines that a priority of a first synchronization signal is higher than the priority of the second synchronization signal, where the first synchronization signal is information that is sent by the first terminal device and that is used for beam training, and the first synchronization signal includes a first synchronization signal identifier. The first terminal device sends the first synchronization signal, where the first synchronization signal includes the first synchronization signal identifier, and the first synchronization signal identifier indicates the priority of the first synchronization signal.

In this application, the first terminal device is a terminal device or a module or an apparatus in the terminal device. For example, the first terminal device is a chip. Similarly, the second terminal device is a terminal device or a module or an apparatus in the terminal device. For example, the second terminal device is a chip.

On the sidelink, because no base station participates in scheduling beam training, the beam training between the terminal devices cannot be performed in an orderly manner. According to the communication method provided in this embodiment of this application, when determining that the priority of the first synchronization signal is higher than the priority of the second synchronization signal, the first terminal device sends the first synchronization signal for beam training, so that the beam training is implemented on the sidelink.

It should be noted that, before priorities of synchronization signals are compared, the terminal devices may send the synchronization signals based on a configured or preconfigured parameter. In other words, both the first terminal device and the second terminal device may send synchronization signals. It may be understood that the synchronization signals in such a phase are sent in an out-of-order manner, and are used in an initial phase in which the terminal devices obtain the priorities of the synchronization signals of each other. In the initial phase, the first terminal device may receive one or more second synchronization signals. If determining that the first synchronization signal is higher than all second synchronization signals, the first terminal device may send the first synchronization signal for beam training. In this application, because the priority of the first synchronization signal is higher than the priority of the second synchronization signal, the first terminal device may lead a scheduling process of beam training, and is referred to as a coordination device as a manager of a coordination group. Correspondingly, another terminal device that receives the first synchronization signal may be considered as a member of the coordination group, receives scheduling information of the first terminal device, and performs beam training based on an indication of the scheduling information in an orderly manner. According to the communication method provided in this embodiment of this application, the first terminal device may implement beam training with second terminal devices.

In a possible implementation, the first terminal device receives synchronization signals sent by a plurality of terminal devices. If the first terminal device determines that the priority of the first synchronization signal is higher than a priority of a synchronization signal sent by any one of the plurality of terminal devices, the first terminal device sends the first synchronization signal. The plurality of terminal devices form a second terminal device set, and the second terminal device set includes the second terminal device. For ease of understanding, the first terminal device and all the terminal devices in the second terminal device set may be referred to as a coordination group. Any second terminal device in the second terminal device set is a member of the coordination group. The first terminal device is a coordination device. It can be learned from the foregoing description that the second terminal device is a terminal device whose synchronization signal has a priority lower than the priority of the synchronization signal of the first terminal device. To facilitate differentiation between different terminal devices in the second terminal device set, the plurality of terminal devices may be respectively referred to as the second terminal device, a third terminal device, and the like.

In a possible implementation of the first aspect, the method further includes: The first terminal device sends scheduling information, where the scheduling information indicates any two of at least two second terminal devices to perform beam training.

According to the communication method provided in this application, the any two second terminal devices are any two second terminal devices in the second terminal device set. The first terminal device may further send the scheduling information, to indicate the any two second terminal devices to perform beam training. For example, beam training is performed between the second terminal device and the third terminal device. If the coordination group for scheduling includes two or more members of the coordination group, after the first terminal device separately completes beam training with the members of the coordination group, the first terminal device schedules any two terminal devices in the members of the coordination group to perform beam training, so that sidelink beam training is performed in an orderly manner.

In a possible implementation of the first aspect, the scheduling information indicates a time-frequency resource on which the second terminal device sends a synchronization signal.

According to the communication method provided in this application, the scheduling information sent by the first terminal device may indicate the time-frequency resource on which the second terminal device sends the synchronization signal. When the second terminal device sends the synchronization signal, another second terminal device in the at least two second terminal devices, namely, another member in the coordination group, receives the synchronization signal, so that beam training with the second terminal device may be implemented. It may be understood that the scheduling information indicates the time-frequency resource on which the second terminal device sends the synchronization signal, and the another second terminal device in the coordination group does not send a synchronization signal on the time-frequency resource, so that a conflict can be avoided, and beam training can be implemented in an orderly manner.

In a possible implementation of the first aspect, the scheduling information further indicates a time-frequency resource on which none of at least one second terminal device sends a synchronization signal.

According to the communication method provided in this application, considering that the second terminal device involved in the scheduling information may further have a communication requirement with another terminal device outside the coordination group, the scheduling information may further indicate the time-frequency resource on which no synchronization signal is sent, for receiving, on the time-frequency resource, a synchronization signal sent by a possible third terminal device. A priority of the synchronization signal of the third terminal device is unknown, and a new coordination device may be determined through comparison. The method is applied to wider application scenarios.

In a possible implementation of the first aspect, the method further includes: The first terminal device determines one or more of the following parameters: duration of sending the first synchronization signal, a quantity of beams, duration of one beam sweeping, a quantity of repeated beam sweeping times, and total duration of beam sweeping. That the first terminal device sends the first synchronization signal includes: The first terminal device sends the first synchronization signal based on the parameter. Beam sweeping is a process in which a transmit end device sequentially selects, in a specified scanning manner within a time period, a beam for sending or receiving, to cover a spatial area. The duration of one beam sweeping is duration required by the first terminal device to send a synchronization signal in beam directions in the specified scanning manner.

According to the communication method provided in this application, the first terminal device determines a parameter related to sending of a synchronization signal. Optionally, the parameter is configured by a network device or the parameter is predefined. In a possible implementation, the first terminal device sends the first synchronization signal based on a first configuration parameter in the initial phase, and sends a synchronization signal based on a second configuration parameter after determining that the priority of the first synchronization signal is higher than the priority of the second synchronization signal.

In a possible implementation of the first aspect, the first synchronization signal further includes a first index, and the first index indicates a beam direction corresponding to the first synchronization signal.

According to the communication method provided in this application, the first synchronization signal further includes the first index indicating the beam direction corresponding to the first synchronization signal. Because a plurality of beams may be configured for one terminal device, synchronization signals are sent through the plurality of beams in different beam directions. The first index included in the synchronization signal may be used for distinguishing the beam direction for sending the synchronization signal. In other words, the synchronization signals sent in the different beam directions include different index information.

In a possible implementation of the first aspect, the first index includes a first sequence and a first bit, the first sequence is an initial value of a pseudo random sequence of a synchronization signal demodulation reference signal, a size of the first sequence is three bits, the first bit is a reserved bit in a synchronization signal payload, and a value of the first bit is zero or one.

According to the communication method provided in this application, in a possible implementation, the first index includes the first sequence and the first bit. The first sequence is the initial value of the pseudo random sequence of a synchronization signal demodulation reference signal (demodulation reference signal, DMRS), and the size of the first sequence is three bits. The first bit is the reserved bit in the synchronization signal payload, a size of the first bit is one bit in a two-bit reserved resource, and a value of the first bit is zero or one. In this implementation, the reserved bit may be fully applied and beam differentiation requirements in most application scenarios are met.

A second aspect of this application provides a communication method, including: A second terminal device receives a first synchronization signal, where the first synchronization signal is information that is sent by a first terminal device and that is used for beam training, the first synchronization signal includes a first synchronization signal identifier, and the first synchronization signal identifier indicates a priority of the first synchronization signal. The second terminal device determines that the priority of the first synchronization signal is higher than a priority of a second synchronization signal, where the second synchronization signal is information that is sent by the second terminal device and that is used for beam training, the second synchronization signal includes a second synchronization signal identifier, and the second synchronization signal identifier indicates the priority of the second synchronization signal. The second terminal device stops sending the second synchronization signal.

On a sidelink, because no base station participates in scheduling beam training, the beam training between terminal devices cannot be performed in an orderly manner. According to the communication method provided in this embodiment of this application, the second terminal device receives the first synchronization signal, and stops sending the second synchronization signal when determining that the priority of the first synchronization signal is higher than the priority of the second synchronization signal. Therefore, the first terminal device is used as a transmit end, and the second terminal device is used as a receive end to perform beam training, so that sidelink beam training is implemented in an orderly manner.

It should be noted that, before priorities of synchronization signals are compared, the terminal devices may send the synchronization signals based on a configured or preconfigured parameter. In other words, both the first terminal device and the second terminal device may send the synchronization signals. It may be understood that the synchronization signals in such a phase are sent in an out-of-order manner, and are used in an initial phase in which the terminal devices obtain the priorities of the synchronization signals of each other. In the initial phase, the second terminal device may send second synchronization information randomly or in a configured manner. If the second terminal device determines, based on the first synchronization signal received in the initial phase, that the first synchronization signal is higher than the second synchronization signal, the second terminal device stops sending the synchronization signal, and sending of the synchronization signal enters an ordered sending phase. In this application, because the priority of the first synchronization signal is higher than the priority of the second synchronization signal, the first terminal device may lead a scheduling process of beam training, and is referred to as a coordination device as a manager of a coordination group. Correspondingly, the second terminal device that receives the first synchronization signal may be considered as a member of the coordination group, receives scheduling information of the first terminal device, and performs beam training based on an indication of the scheduling information in an orderly manner. According to the communication method provided in this embodiment of this application, the second terminal device may implement beam training with the first terminal device.

In a possible implementation of the second aspect, the method further includes: The second terminal device receives scheduling information, where the scheduling information indicates the second terminal device to perform beam training.

According to the communication method provided in this application, the second terminal device may further receive the scheduling information sent by the first terminal device, and perform beam training based on the scheduling information, so that the beam training on the sidelink is performed in an orderly manner.

In a possible implementation of the second aspect, the scheduling information indicates a time-frequency resource on which the second terminal device sends a synchronization signal.

According to the communication method provided in this application, the scheduling information sent by the first terminal device may indicate the time-frequency resource on which the second terminal device sends the synchronization signal. When the second terminal device sends the synchronization signal, another member in the coordination group receives the synchronization signal, so that beam training with the second terminal device may be implemented. It may be understood that the scheduling information indicates the time-frequency resource on which the second terminal device sends the synchronization signal, and the another second terminal device in the coordination group does not send the synchronization signal on the time-frequency resource, so that a conflict can be avoided, and beam training can be implemented in an orderly manner.

In a possible implementation of the second aspect, the scheduling information further indicates a time-frequency resource on which the second terminal device does not send a synchronization signal.

According to the communication method provided in this application, considering that the second terminal device involved in the scheduling information may further have a communication requirement with another terminal device outside the coordination group, the scheduling information may further indicate the time-frequency resource on which no synchronization signal is sent, for receiving, on the time-frequency resource, a synchronization signal sent by a possible third terminal device. A priority of the synchronization signal of the third terminal device is unknown, and a new coordination device may be determined through comparison. The method is applied to wider application scenarios.

In a possible implementation of the second aspect, the method further includes: The second terminal device determines one or more of the following parameters: duration of sending the second synchronization signal, a quantity of beams, duration of one beam sweeping, a quantity of repeated beam sweeping times, and total duration of beam sweeping. The method further includes: The second terminal device sends the second synchronization signal based on the parameter.

According to the communication method provided in this application, the second terminal device determines a parameter related to sending of a synchronization signal. Optionally, the parameter is configured by a network device or the parameter is predefined. In a possible implementation, the second terminal device sends the first synchronization signal based on a first configuration parameter in the initial phase, and sends the synchronization signal based on a second configuration parameter after receiving the scheduling information. Optionally, the second configuration parameter is a parameter configured by the second terminal device or a parameter included in the scheduling information.

In a possible implementation of the second aspect, the second synchronization signal further includes a second index, and the second index indicates a beam direction corresponding to the second synchronization signal.

According to the communication method provided in this application, the second synchronization signal further includes information about an index indicating the beam direction corresponding to the second synchronization signal. Because a plurality of beams may be configured for one terminal device, synchronization signals are sent through the plurality of beams in different beam directions. A first index included in the synchronization signal may be used for distinguishing the beam direction for sending the synchronization signal. In other words, the synchronization signals sent in the different beam directions include different index information.

In a possible implementation of the second aspect, the second index includes a second sequence and a second bit, the second sequence is an initial value of a pseudo random sequence of a synchronization signal demodulation reference signal, a size of the second sequence is three bits, the second bit is a reserved bit in a synchronization signal payload, and a value of the second bit is zero or one.

In this implementation, the first synchronization signal identifier includes a first sub-identifier part and a second sub-identifier part. The first sub-identifier part, the second sub-identifier part, and the reserved bit that is carried in a third resource and whose size is 1 bit jointly indicate a synchronization priority of the first terminal device. In this implementation, the reserved bit may be fully applied for the second index and beam differentiation requirements in most application scenarios are met.

A third aspect of this application provides a terminal device, including: a transceiver unit, configured to receive a second synchronization signal, where the second synchronization signal is information that is sent by a second terminal device and that is used for beam training, the second synchronization signal includes a second synchronization signal identifier, and the second synchronization signal identifier indicates a priority of the second synchronization signal; and a determining unit, configured to determine that a priority of a first synchronization signal is higher than the priority of the second synchronization signal, where the first synchronization signal is information for beam training, and the first synchronization signal includes a first synchronization signal identifier. The transceiver unit is further configured to send the first synchronization signal, where the first synchronization signal includes the first synchronization signal identifier, and the first synchronization signal identifier indicates the priority of the first synchronization signal.

For example, the terminal device may be a first terminal device. The first terminal device is a terminal device or some modules or apparatuses in the terminal device, for example, a chip.

In a possible implementation of the third aspect, the transceiver unit is further configured to send scheduling information, where the scheduling information indicates any two of at least two second terminal devices to perform beam training.

In a possible implementation of the third aspect, the scheduling information indicates a time-frequency resource on which the second terminal device sends a synchronization signal.

In a possible implementation of the third aspect, the scheduling information further indicates a time-frequency resource on which none of at least one second terminal device sends a synchronization signal.

In a possible implementation of the third aspect, the determining unit is further configured to determine one or more of the following parameters: duration of sending the first synchronization signal, a quantity of beams, duration of one beam sweeping, a quantity of repeated beam sweeping times, and total duration of beam sweeping. The transceiver unit is specifically configured to send the synchronization signal based on the parameter.

In a possible implementation of the third aspect, the first synchronization signal further includes a first index, and the first index indicates index information beam direction corresponding to the first synchronization signal.

In a possible implementation of the third aspect, the first index includes a first sequence and a first bit, the first sequence is an initial value of a pseudo random sequence of a synchronization signal demodulation reference signal, a size of the first sequence is three bits, the first bit is a reserved bit in a synchronization signal payload, and a value of the first bit is zero or one.

A fourth aspect of this application provides a terminal device, including: a transceiver unit, configured to receive a first synchronization signal, where the first synchronization signal is information that is sent by a first terminal device and that is used for beam training, the first synchronization signal includes a first synchronization signal identifier, and the first synchronization signal identifier indicates a priority of the first synchronization signal; and a determining unit, configured to determine that the priority of the first synchronization signal is higher than a priority of a second synchronization signal, where the second synchronization signal is information that is sent by a second terminal device and that is used for beam training, the second synchronization signal includes a second synchronization signal identifier, and the second synchronization signal identifier indicates the priority of the second synchronization signal. The transceiver unit is further configured to stop sending the synchronization signal.

For example, the terminal device may be the second terminal device. The second terminal device is a terminal device or some modules or apparatuses in the terminal device, for example, a chip.

In a possible implementation of the fourth aspect, the transceiver unit is further configured to receive scheduling information, where scheduling information indicates the second terminal device to perform beam training.

In a possible implementation of the fourth aspect, the scheduling information indicates a time-frequency resource on which the second terminal device sends a synchronization signal.

In a possible implementation of the fourth aspect, the scheduling information further indicates a time-frequency resource on which the second terminal device does not send a synchronization signal.

In a possible implementation of the fourth aspect, the determining unit is further configured to determine one or more of the following parameters: duration of sending the second synchronization signal, a quantity of beams, duration of one beam sweeping, a quantity of repeated beam sweeping times, and total duration of beam sweeping. The method further includes: The second terminal device sends the second synchronization signal based on the parameter.

In a possible implementation of the fourth aspect, the second synchronization signal further includes a second index, and the second index indicates beam direction index information corresponding to the second synchronization signal.

In a possible implementation of the fourth aspect, the second index includes a second sequence and a second bit, the second sequence is an initial value of a pseudo random sequence of a synchronization signal demodulation reference signal, a size of the second sequence is three bits, the second bit is a reserved bit in a synchronization signal payload, and a value of the second bit is zero or one.

A fifth aspect of this application provides a terminal device, including: a memory, where the memory stores computer-readable instructions; and a processor connected to the memory, where when the computer-readable instructions are executed by the processor, the terminal device is enabled to implement the method according to any one of the first aspect, the second aspect, and the possible implementations.

A sixth aspect of this application provides a computer program product, including computer-readable instructions. When the computer-readable instructions are run on a computer, the computer is enabled to perform the method according to any one of the first aspect, the second aspect, and the possible implementations.

A seventh aspect of this application provides a computer-readable storage medium. The computer-readable storage medium stores instructions; and when the instructions are run on a computer, the computer is enabled to perform the method according to any one of the first aspect, the second aspect, and the possible implementations.

An eighth aspect of this application provides a chip, including a processor. The processor is configured to read and execute a computer program stored in a memory, to perform the method according to any possible implementation of any one of the foregoing aspects. Optionally, the chip includes the memory, and the memory is connected to the processor via a circuit or a wire. Further, optionally, the chip further includes a communication interface, and the processor is connected to the communication interface. The communication interface is configured to receive data and/or information that need/needs to be processed. The processor obtains the data and/or the information from the communication interface, processes the data and/or the information, and outputs a processing result through the communication interface. The communication interface may be an input/output interface.

For technical effects brought by the second aspect, the third aspect, the fourth aspect, the fifth aspect, the sixth aspect, the seventh aspect, the eighth aspect, and any one of implementations thereof, refer to technical effects brought by corresponding implementations of the first aspect. Details are not described herein again.

## BRIEF DESCRIPTION OF DRAWINGS

FIG. 1 is a diagram of an architecture of an application scenario of a communication method according to an embodiment of this application;

FIG. 2 is a diagram of an interaction embodiment of a communication method according to an embodiment of this application;

FIG. 3 is a diagram of beam training of a communication method according to an embodiment of this application;

FIG. 4 is a diagram of an index included in a synchronization signal according to an embodiment of this application;

FIG. 5 is a diagram of a coordination group according to an embodiment of this application;

FIG. 6 is a diagram of an embodiment of a communication method according to an embodiment of this application;

FIG. 7 is a diagram of scheduling information according to an embodiment of this application;

FIG. 8 is a diagram of another embodiment of a communication method according to an embodiment of this application;

FIG. 9 is another diagram of scheduling information according to an embodiment of this application;

FIG. 10 is a diagram of an embodiment of a terminal device according to an embodiment of this application;

FIG. 11 is a diagram of another embodiment of a terminal device according to an embodiment of this application; and

FIG. 12 is a diagram of another embodiment of a terminal device according to an embodiment of this application.

## DESCRIPTION OF EMBODIMENTS

This application provides a communication method, to implement beam training between terminal devices on a sidelink.

It should be understood that technical solutions in embodiments of this application may be applied in a 5G communication system, and may even be applied to a future communication system after 5G, and the like. This is not limited in embodiments of this application.

The following describes embodiments of this application with reference to accompanying drawings. Apparently, the described embodiments are merely some rather than all of embodiments of this application. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and the like are intended to distinguish similar objects but do not necessarily indicate a specific order or sequence. It should be understood that the data termed in such a way are interchangeable in proper circumstances so that embodiments described herein can be implemented in an order other than content illustrated or described herein. Moreover, the terms "include", "have" and any other variants are intended to cover non-exclusive inclusion, for example, a process, method, system, product, or device that includes a list of steps or modules is not necessarily limited to those expressly listed steps or modules, but may include other steps or modules not expressly listed or inherent to such a process, method, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved.

The terminal device may be a device that provides a user with voice/data. For example, a handheld device, a vehicle-mounted device, a vehicle-mounted communication module, or another embedded communication module that has a wireless connection function. The terminal device may include user equipment (user equipment, UE), and sometimes is also referred to as a mobile station (mobile station, MS), a mobile terminal (mobile terminal, MT), a terminal, an access station, a UE station, a remote station, a wireless communication device, a user apparatus, or the like.

For example, the terminal device may be a mobile phone (mobile phone), a tablet computer (Pad), a computer with a wireless transceiver function, a notebook computer, a palmtop computer, a virtual reality (virtual reality, VR) device, an augmented reality (augmented reality, AR) device, a wireless terminal in industrial control, an entire vehicle, a wireless communication module in an entire vehicle, a vehicle-mounted T-box (Telematics BOX), a roadside unit RSU, a wireless terminal in self-driving, a smart speaker in an IoT network, a wireless terminal device in telemedicine, a wireless terminal device in a smart grid, a wireless terminal device in transportation security, a wireless terminal device in a smart city, a wireless terminal device in a smart home, or the like. This is not limited in embodiments of this application.

By way of example but not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that focus on only one type of application function and need to work with other devices such as smartphones, such as various smart bands or smart jewelry for measuring physical signs.

The terminal device may alternatively be a V2X device, for example, a smart car (smart car or intelligent car), a digital car (digital car), an unmanned car (unmanned car, driverless car, pilotless car, or automobile), a self-driving car (self-driving car or autonomous car), a pure electric vehicle (pure EV or Battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), or a road side unit (road site unit, RSU). The terminal device may alternatively be a device in device to device (device to device, D2D) communication, for example, an electricity meter or a water meter.

In addition, in embodiments of this application, the terminal device may alternatively be a terminal device in an IoT system. An IoT is an important part of future development of information technologies. A main technical feature of the IoT is connecting a thing to a network through a communication technology, to implement an intelligent network for interconnection between a person and a machine or between one thing and another.

If various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBUs).

The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The vehicle uses the vehicle-mounted module, the vehicle-mounted assembly, the vehicle-mounted component, the vehicle-mounted chip, or the vehicle-mounted unit that is built in the vehicle, to implement a method in this application.

For ease of understanding this application, technical terms in this application are first explained and described.

(1) Device-to-device (device-to-device, D2D) communication is a type of communication that allows, under control of a system, a plurality of terminals supporting a D2D function to perform direct discovery and direct communication when there is a network infrastructure or no network infrastructure.
V2X communication may be considered as a special case of the D2D communication. The V2X communication is sidelink (sidelink, SL) communication, is communication between a vehicle and any external object, and includes vehicle to vehicle (vehicle to vehicle, V2V) communication, vehicle to pedestrian (vehicle to pedestrian, V2P) communication, vehicle to infrastructure (vehicle to infrastructure, V2I) communication, vehicle to network (vehicle to network, V2N) communication, and the like.
(2) A sidelink is a link used for direct communication between terminals. In a protocol, the sidelink is often used to represent D2D. The sidelink includes two types of UE: One is within a coverage area of a base station, and the other is outside the coverage area of the base station. A Uu interface and an Xn interface are respectively an interface between UE and a base station, and an interface between base stations. An interface used for the sidelink is a PC5 interface.
(3) FR (Frequency Range, frequency range) 2

A 5G spectrum is divided into two areas: an FR 1 and the FR 2.

A frequency range of the FR 1 is 450 MHz to 6 GHz. The FR 1 has advantages of a low frequency, a strong diffraction capability, and good coverage, and is a primary spectrum for current 5G.

A frequency range of the FR 2 is 24.25 GHz to 52.6 GHz. The FR 2 has advantages of an ultra-large bandwidth, a clean spectrum, and low interference, and is used as a subsequent extended frequency of 5G. Because the FR 2 corresponds to a narrower beam, a high requirement is imposed on beam alignment. Therefore, this application describes a beam training method on an SL in an FR 2 frequency band.

(4) Beam training

The beam training includes transmit beam training and receive beam training, and may be divided into three steps. Operations of the steps are summarized as follows.

P-1: A base station sends a reference signal based on a transmit beam set. Transmit beams in the set correspond to different transmit directions, and UE selects a transmit beam of the base station and a receive beam of the UE by measuring and feeding back the beams.

P-2: Based on P-1, the base station sends a reference signal based on a smaller transmit beam set, and the UE measures and feeds back beams, to improve the transmit beam of the base station.

P-3: The base station sends a reference signal by using one transmit beam, and the UE measures the beam, to improve the receive beam of the UE.

Based on the foregoing three steps, downlink beam training of a 5G NR is performed. In particular, in step P-1 of the beam training, a possible reference signal is a synchronization signal block (synchronization signal block, SSB). Therefore, the base station configures a maximum of 64 transmit beams, and each beam corresponds to one SSB and a time-frequency resource that is to be used by the UE for feedback. The base station sequentially sends SSBs on the beams in a scanning manner. Meanwhile, the UE performs measurement to obtain reference signal received powers (reference signal received powers, RSRPs) of the SSBs and performs feedback.

The foregoing beam training is performed based on scheduling of the base station. When there is no scheduling of the base station, how to perform beam training between sidelinks is not clear. In view of this, an embodiment of this application provides a communication method, to implement beam training between communication devices on a sidelink. In this embodiment of this application, the beam training includes beam matching, beam alignment, beam failure recovery, or the like. Specific content is not limited.

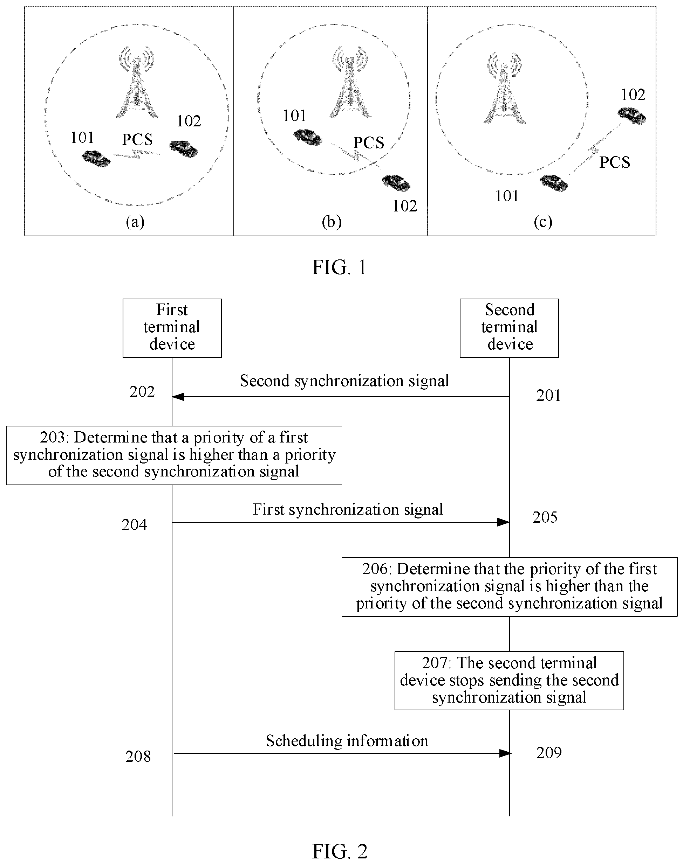

The following describes an application scenario of the communication method provided in this embodiment of this application. Refer to FIG. 1.

In a V2X communication scenario, vehicles may communicate with each other through a sidelink. SL communication is direct communication between the vehicles. In other words, direct communication is performed between the vehicles without forwarding data through a network device.

FIG. 1 is a diagram of an application scenario of a communication method according to an embodiment of this application. As shown in FIG. 1, an example in which a terminal device in a communication system is a vehicle is used for description. A vehicle 101 communicates with a vehicle 102 through an SL. It should be noted that the vehicle 101 and the vehicle 102 may be in a network coverage of a base station, or may not be in the network coverage of the base station. As shown in (a) in FIG. 1, both the vehicle 101 and the vehicle 102 are located in the network coverage of the base station. Alternatively, as shown in (b) in FIG. 1, the vehicle 101 is located in the network coverage of the base station, and the vehicle 102 is not located in the network coverage of the base station. Alternatively, as shown in (c) in FIG. 1, neither the vehicle 101 nor the vehicle 102 is located in the network coverage of the base station.

Regardless of a scenario in (a), (b), or (c) in FIG. 1, SL communication is performed between the vehicle 101 and the vehicle 102 through a PC5 interface. Beam training includes beam alignment, and the beam alignment means that a direction of a transceiver beam of the vehicle 101 is aligned with a direction of a transceiver beam of the vehicle 102.

When there is no scheduling of the base station, how to perform beam training between sidelinks is not clear. It may be learned that the beam alignment between the vehicle 101 and the vehicle 102 cannot be implemented. However, an embodiment of this application provides a communication method, to implement beam training between communication devices on a sidelink.

In this application, a first terminal device is a terminal device or a module or an apparatus in the terminal device. For example, the first terminal device is a chip. Similarly, a second terminal device is a terminal device or a module or an apparatus in the terminal device. For example, the second terminal device is a chip.

It should be noted that, before the terminal device compares priorities of synchronization signals, terminal devices may send the synchronization signals, in other words, both the first terminal device and the second terminal device send the synchronization signals. It may be understood that the synchronization signals in such a phase are sent in an out-of-order manner, and are used in an initial phase in which the terminal devices obtain the priorities of the synchronization signals of each other. For ease of understanding, in embodiments of this application, in one process of sending and receiving a synchronization signal, a transmit end terminal device that sends the synchronization signal is referred to as a transmit end device, and is referred to as a transmit end for short; and a terminal device that receives the synchronization signal is referred to as a receive end device, and is referred to as a receive end for short. It may be understood that such differentiation is only for one process of sending and receiving the synchronization signal. In actual application, each terminal device may be used as a transmit end in some scenarios, and may also be used as a receive end in other scenarios. This is not specifically limited herein.

The following describes a communication method provided in this application. Refer to FIG. 2.

201: A second terminal device sends a second synchronization signal.

The second terminal device sends the second synchronization signal based on a parameter. There are a plurality of manners of determining the parameter.

Optionally, the parameter is configured by a network device.

Specifically, that the parameter is configured by the network device may be understood as one of the following two implementations. In a possible implementation, the network device configures the parameter for a terminal apparatus through RRC signaling or a system information block (system information block, SIB) message. Alternatively, in another possible implementation, the network device indicates the parameter to the terminal apparatus based on downlink control information (downlink control information, DCI). The parameter may alternatively be preconfigured, and may be understood as a parameter preconfigured when the terminal apparatus is delivered from a factory.

Optionally, the parameter may alternatively be predefined. This may be understood as that the parameter is defined in a communication standard protocol or a regional or national law or specification and a terminal device does not need to obtain the parameter through configuration or indication of the network device and calculation.

In a possible implementation, the second terminal device determines one or more of the following parameters: duration of sending the second synchronization signal, a quantity of beams, duration of one beam sweeping, a quantity of repeated beam sweeping times, and total duration of beam sweeping. The second terminal device may send the second synchronization signal based on the foregoing parameters.

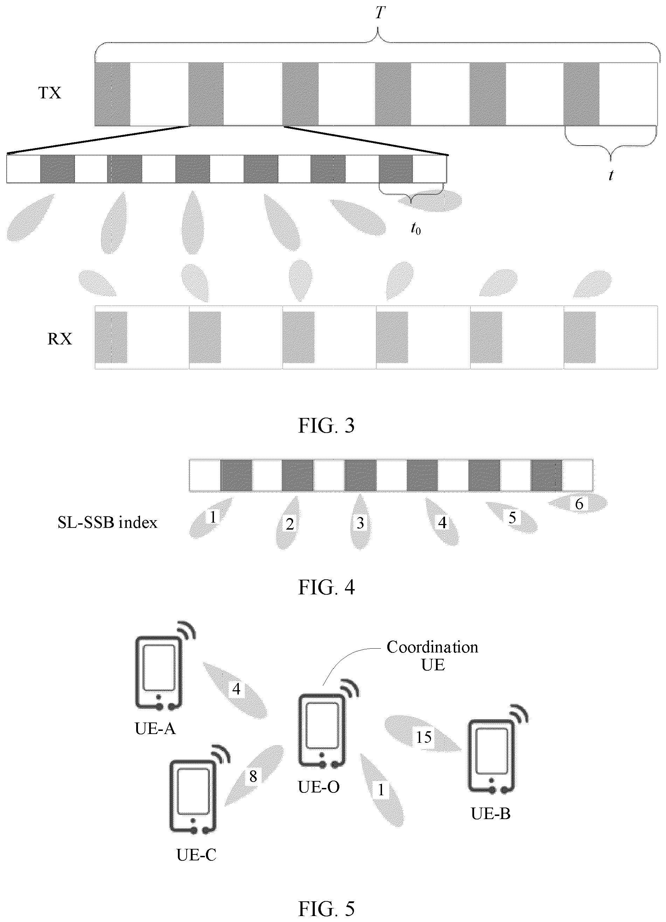

The following describes meanings of the parameters in detail. For example, refer to FIG. 3. The duration of sending the second synchronization signal is represented as t0. The quantity of beams of a transmit end device is represented as n. The duration of one beam sweeping is represented as t. The quantity of repeated beam sweeping times is represented as N. The total duration of beam sweeping is represented as T. Within the time t0, the second terminal device sends a synchronization signal (for example, an SSB) in a specific beam direction. Within the time t, the transmit end device needs to complete sending of synchronization signals in all beam directions. If the transmit end device has n beam directions, the time t includes at least n pieces of time t0. Within the time T, the transmit end device (TX) needs to repeat N beam sweeping processes. N is at least a quantity of beams of a receive end device. The receive end device (RX) switches a receive beam once every time t in the time T. If a transceiver relationship of the terminal device may be determined, and the transmit end and the receive end are synchronized, the receive end device may complete measurement of a beam set of the transmit end device within the time T. Optionally, the time and the beam parameters t0, t, n, T, and N may be configured or preconfigured. It should be noted that the duration indicated by t0 in FIG. 3 may be duration required for sending a synchronization signal, or duration (corresponding to a shadow part in an area indicated by t0 in FIG. 3) required for sending a synchronization signal and interval duration (corresponding to a blank part in the area indicated by t0 in FIG. 3) for waiting for sending a next synchronization signal. Similarly, the duration of one beam sweeping indicated by t may be duration (corresponding to a shadow part in an area indicated by t in FIG. 3) required for completing sending of n synchronization signals, or duration required for completing sending of n synchronization signals and interval duration (corresponding to a blank part in the area indicated by t in FIG. 3) for waiting for next beam sweeping.

The second synchronization signal includes a second synchronization signal identifier. It should be noted that the second terminal device may randomly determine the second synchronization signal identifier in an optional identifier range. There are a plurality of optional identifier ranges and a plurality of manners of carrying the second synchronization signal identifier by the second synchronization signal. Details are described subsequently.

202: A first terminal device receives the second synchronization signal.

The first terminal device receives the second synchronization signal. The second synchronization signal is information that is sent by the second terminal device and that is used for beam training. The second synchronization signal includes the second synchronization signal identifier, and the second synchronization signal identifier indicates a priority of the second synchronization signal. It may be understood that the first terminal device may receive a plurality of synchronization signals sent by a plurality of terminal devices. A specific quantity is not limited herein.

It should be noted that the synchronization signal identifier is used for distinguishing a terminal device in a beam training process. To be specific, the first terminal device distinguishes a transmit end device of synchronization information based on different received synchronization signal identifiers. For example, a synchronization signal is an SSB, and a synchronization signal identifier is a sidelink synchronization signal identifier (sidelink synchronization signal identifier, SL-SSID).

203: The first terminal device determines that a priority of a first synchronization signal is higher than the priority of the second synchronization signal.

The first synchronization signal is information that is sent by the first terminal device and that is used for beam training. The first synchronization signal includes a first synchronization signal identifier, and the first synchronization signal identifier indicates the priority of the first synchronization signal.

Specifically, a priority of the synchronization signal identifier may be determined according to a preset rule. Optionally, the terminal device determines a priority of the SSB based on the SL-SSID, and a smaller SL-SSID indicates a higher priority. Alternatively, the terminal device determines a priority of the SSB based on the SL-SSID, and a larger SL-SSID indicates a higher priority.

In this embodiment, the first terminal device determines that the priority of the first synchronization signal is higher than the priority of the second synchronization signal. In this case, the first terminal device may be used as a coordination device to schedule another terminal device with a low priority to perform beam training.

In a possible implementation, the first terminal device receives synchronization signals sent by at least two second terminal devices, and determines that the priority of the first synchronization signal is higher than a priority of a synchronization signal sent by any one of the at least two second terminal devices. The at least two second terminal devices form a second terminal device set. The first terminal device and all second terminal devices in the second terminal device set may be considered as a coordination group. Any second terminal device in the second terminal device set is a member of the coordination group. The first terminal device is a coordination device in the coordination group, and may be preferentially used as a transmit end to perform beam training with a member of the coordination group.

204: The first terminal device sends the first synchronization signal to the second terminal device.

In this embodiment of this application, the first terminal device preferentially sends the synchronization signal based on that the priority of the first synchronization signal is higher than the priority of the second synchronization signal. In other words, the first terminal device is used as a transmit end to send the first synchronization signal to the second terminal device. It may be understood that the second terminal device set may include a plurality of terminal devices, and any second terminal device in the second terminal device set may receive the first synchronization signal, and separately perform beam training with the first terminal device based on the first synchronization signal.

Optionally, when the first terminal device determines that the priority of the first synchronization signal is lower than the priority of the second synchronization signal or lower than a priority of another received synchronization signal, the first terminal device stops sending the first synchronization signal, and is used as a receive end to perform beam training with a terminal device corresponding to a synchronization signal with a highest priority.

In another possible implementation, in a case in which the second synchronization signal is not received within a preset duration range, the first terminal device may also send the first synchronization signal for initial synchronization and beam training.

In a possible implementation, the first terminal device sends the first synchronization signal based on a first configuration parameter in an initial phase, and sends the first synchronization signal based on a second configuration parameter after determining that the priority of the first synchronization signal is higher than the priority of the second synchronization signal.

In a possible implementation, the first synchronization signal further includes a first index indicating a beam direction corresponding to the first synchronization signal. Because a plurality of beams may be configured for one terminal device, synchronization signals are sent through the plurality of beams in different beam directions. The first index included in the synchronization signal may be used for distinguishing the beam direction for sending the synchronization signal. In other words, the synchronization signals sent in the different beam directions include different index information. The first index carried in the first synchronization signal may indicate a transmit beam direction of the synchronization signal.

205: The second terminal device receives the first synchronization signal sent by the first terminal device.

Corresponding to step 204, the second terminal device receives the first synchronization signal sent by the first terminal device, to perform beam training. For a specific implementation, refer to the foregoing descriptions of a beam training part. Details are not described herein again.

On a sidelink, because no base station participates in scheduling beam training, the beam training between the terminal devices cannot be performed in an orderly manner. According to the communication method provided in this embodiment, when the first terminal device determines that the priority of the first synchronization signal is higher than the priority of the second synchronization signal, the first terminal device is used as a transmit end to send the first synchronization signal for beam training, and the second terminal device is used as a receive end to receive the first synchronization signal, so that the beam training is implemented on the sidelink.

206: The second terminal device determines that the priority of the first synchronization signal is higher than the priority of the second synchronization signal.

Specifically, the priority of the synchronization signal identifier may be determined according to the preset rule. Optionally, the terminal device determines the priority of the SSB based on the SL-SSID, and a smaller SL-SSID indicates a higher priority. Alternatively, the terminal device determines the priority of the SSB based on the SL-SSID, and a larger SL-SSID indicates a higher priority. It should be noted that all terminal devices determine a priority of a synchronization signal according to a same rule.

In a possible implementation, the priority of the first synchronization signal is the same as the priority of the second synchronization signal. For example, a value of the first synchronization signal identifier randomly determined by the first terminal device is the same as a value of the second synchronization signal identifier randomly determined by the second terminal device. Because the first terminal device randomly determines the value of the first synchronization signal identifier from a preset value range, it may be learned that a larger preset value range indicates a lower probability that the value of the first synchronization signal identifier is the same as the value of the second synchronization signal identifier. When the value of the first synchronization signal identifier is the same as the value of the second synchronization signal identifier, whether the priority of the first synchronization signal is higher than the priority of the second synchronization signal may be determined in another manner. A specific manner is not limited herein.

207: The second terminal device stops sending the second synchronization signal.

The second terminal device determines, based on that the priority of the first synchronization signal is higher than the priority of the second synchronization signal, that the first terminal device is a transmit end device, and the second terminal device is used as a receive end device to perform beam training. Therefore, the second terminal device stops sending the second synchronization signal.

Optionally, when the second terminal device determines that the priority of the second synchronization signal is higher than the priority of the first synchronization signal and is higher than a priority of another received synchronization signal, the second terminal device does not stop sending the second synchronization signal, in other words, continues sending the second synchronization signal.

According to the communication method provided in this embodiment, when the first terminal device determines that the priority of the first synchronization signal is higher than the priority of the second synchronization signal, the first terminal device is used as the transmit end to send the first synchronization signal for beam training. When determining that the priority of the first synchronization signal is higher than the priority of the second synchronization signal, the second terminal device stops sending the second synchronization signal, and is used as the receive end to receive the first synchronization signal, so that the beam training is implemented in an orderly manner on the sidelink. In addition, when performing the beam training with the first terminal device, the second terminal device stops sending the second synchronization signal, so that a conflict in the beam training can be avoided, and a resource waste can be reduced.

It may be understood that the first terminal device may receive synchronization signals separately sent by a plurality of terminal devices. In an implementation, the priority of the first synchronization signal is higher than a priority of any synchronization signal received by the first terminal device. In this case, the second terminal device is a terminal device whose synchronization signal has a priority lower than the priority of the synchronization signal of the first terminal device, and terminal devices whose synchronization signals have priorities lower than the priority of the synchronization signal of the first terminal device form the second terminal device set. For ease of distinguishing between the different terminal devices, two terminal devices in the second terminal device set may be respectively referred to as the second terminal device and a third terminal device. For example, the first terminal device further receives a third synchronization signal from the third terminal device. A priority of the third synchronization signal sent by the third terminal device is lower than the priority of the first synchronization signal.

If the second terminal device set includes two or more terminal devices, after the first terminal device separately performs beam training with any second terminal device in the second terminal device set, any two terminal devices in the second terminal device set also need to perform beam matching. In this case, the first terminal device may be used as a coordination device to schedule any two terminal devices of a plurality of second terminal devices to perform beam training. Specifically, the first terminal device sends scheduling information. The scheduling information may indicate a sequence in which second terminal devices in the second terminal device set send synchronization signals (where the second terminal devices in the second terminal device set may all receive the scheduling information sent by the first terminal device, and in this embodiment, an example in which one second terminal device receives the scheduling information is merely used for description). When any terminal device in the coordination group sends a synchronization signal, another terminal device does not send a synchronization signal by default.

It may be understood that coordination information sent by the first terminal device indicates all members of the coordination group to send synchronization signals, and any member of the coordination group may receive the scheduling information sent by the first terminal device.

For example, an example in which the first terminal device sends the scheduling information to the second terminal device is used for description. Refer to steps 208 and 209.

208: The first terminal device sends the scheduling information.

The first terminal device may further send the scheduling information to the second terminal device based on that the priority of the first synchronization signal is higher than the priority of the second synchronization signal. The scheduling information indicates a time-frequency resource on which the second terminal device sends a synchronization signal.

In a possible implementation, the scheduling information may indicate respective time-frequency resources on which the plurality of second terminal devices send the synchronization signals.

In a possible implementation, the first terminal device sends the scheduling information. The scheduling information indicates any two second terminal devices in the second terminal device set to perform beam training. The second terminal device set includes at least two second terminal devices. The first terminal device and all second terminal devices in the second terminal device set form a coordination group. Any second terminal device in the second terminal device set is a member of the coordination group. The first terminal device is a coordination device, and may schedule any two second terminal devices in the second terminal device set to perform beam training. It may be understood that the scheduling information indicates the time-frequency resource on which the second terminal device sends the synchronization signal, and another second terminal device in the coordination group does not send a synchronization signal on the time-frequency resource, so that a conflict can be avoided, and sidelink beam training can be performed in an orderly manner.

Optionally, considering that the second terminal device involved in the scheduling information may further have a communication requirement with another terminal device outside the coordination group, the scheduling information may further indicate a time-frequency resource on which no synchronization signal is sent, for receiving, on the time-frequency resource, a synchronization signal sent by a possible third terminal device. A priority of the synchronization signal of the third terminal device is unknown, and a new coordination device may be determined through comparison. The method is applied to wider application scenarios.

209: The second terminal device receives the scheduling information sent by the first terminal device.

The second terminal device receives the scheduling information sent by the first terminal device. The scheduling information indicates the time-frequency resource on which the second terminal device sends the synchronization signal.

In a possible implementation, the second terminal device may further send the second synchronization signal based on the time-frequency resource indicated by the scheduling information, to perform beam training with another terminal device.

In this way, in the coordination group, the following may be implemented: The coordination device preferentially performs beam training with members of the coordination group, with reference to step 201 to step 207. The coordination device sends the scheduling information to indicate the members of the coordination group to perform beam training, with reference to step 208 and step 209. In this embodiment, it is merely shown that the member of the coordination group is the second terminal device. In conclusion, the sidelink beam training can be performed in an orderly manner without participation of a base station device.

The following specifically describes a method for determining a synchronization signal identifier by a terminal device.

It should be noted that, there are a plurality of manners of determining the first synchronization signal identifier by the first terminal device. In a possible implementation, the first terminal device randomly determines the first synchronization signal identifier from a first identifier range.

Similar to the SSB, there are two SL-PSS sequences in an SL-SSB. When an SL-PSS sequence is determined, there are 336 SL-SSS sequences. Therefore, 672 SL-SSIDs may be determined in total based on types of the SL-PSS sequences and the SL-SSS sequences, and an expression of the SL-SSID is:

$$N_{ID}^{SL} = N_{ID,1}^{SL} + 336 N_{ID,2}^{SL}$$

$N_{ID}^{SL}$ is a synchronization ID of a physical layer SL. $N_{ID,1}^{SL} \in \{0,1,\ldots,335\}$, and $N_{ID,2}^{SL} \in \{0,1\}$ $N_{ID}^{SL}$ represents a value of the SL-SSID. $N_{ID,2}^{SL}$ represents a sequence number of the SL-PSS sequence. $N_{ID,1}^{SL}$ represents a sequence number of the SL-SSS sequence.

In the standards, $N_{ID}^{SL} = 0$, $N_{ID}^{SL} = 336$, or $N_{ID}^{SL} = 337$ may indicate an SL-SSID with a special configuration (for example, used for determining a synchronization priority). However, in this application, another resource may indicate this type of the special configuration. The SL-SSB includes an SL-primary synchronization signal (primary synchronization signal, PSS), an SL-secondary synchronization signal (secondary synchronization signal, SSS), a physical layer sidelink broadcast channel (physical sidelink broadcast channel, PSBCH), and a gap symbol (GAP). Available resources indicating the type of the special configuration include the following resources.

(1) One of the resources is reservedBits in a payload (payload) of the SL-SSB, with a size of two bits (bits).

(2) One of the resources is $N_{ID,2}^{SL}$ with a size of one bit.

(3) $N_{ID,1}^{SL} \in \{0,1,\ldots,335\}$ is further divided into two groups: {0,1, ...,167} and {168,169, ...,335}, and is represented as:

$$N_{ID,1}^{SL} = N_{ID,11}^{SL} + 168 N_{ID,12}^{SL}$$

$$N_{ID,11}^{SL} \in \{0,1,...,167\} \text{ and } N_{ID,12}^{SL} \in \{0,1\}.$$

In this case, one of the resources is $N_{ID,12}^{SL}$, with a size of one bit, that may indicate the special configuration.

{0,1, ...,167} IDs are used as IDs for distinguishing terminal devices.

Similarly, if $N_{ID,11}^{SL} \in \{0,1,...,167\}$ is further divided into two groups, and is represented as:

$$N_{ID,11}^{SL} = N_{ID,111}^{SL} + 84N_{ID,112}^{SL}$$

two bits in $N_{ID,1}^{SL}$ may indicate the special configuration, and {0, 1, ..., 84} IDs are used as IDs for distinguishing terminal devices.

To distinguish the special configuration of $N_{ID}^{SL}$ in a conventional technology, a three-bit resource is needed, and may be selected from the foregoing available resources. There are a plurality of specific implementations, and the following uses an example for description.

Manner 1:

The three-bit resource includes: $N_{ID,2}^{SL}$ with the size of one bit and the two bits in $N_{ID,1}^{SL}$. In this implementation, there are {0,1, ...,84} available random IDs. In other words, the first identifier range is {0,1, ...,84}.

Manner 2:

The three-bit resource includes: one bit in $N_{ID,2}^{SL}$, one bit in $N_{ID,1}^{SL}$, and one bit in reservedBits. There are {0,1, ...,167} available random IDs. In other words, the first identifier range is {0,1, ...,167}.

Manner 3

The three-bit resource includes: one bit in $N_{ID,2}^{SL}$ and two bits in reservedBits. There are {0,1, ...,335} available random IDs. In other words, the first identifier range is {0,1, ...,335}.

For example, an example of one bit in $N_{ID,2}^{SL}$ and two bits in reservedBits is used. An SL-SSB synchronization source and priority indication information are carried in reservedBits (two bits) and $N_{ID,2}^{SL}$ in the payload of the SL-SSB. In other words, $N_{ID,2}^{SL}$ still indicates an id_net set and an id_oon set, and information in $N_{ID,1}^{SL}$ is indicated by reservedBits.

Specific bit mapping is not limited. In this case, $N_{ID,1}^{SL} \in \{0,1,...,335\}$ in the SL-SSID may be used for distinguishing terminal devices, and the terminal devices may perform random selection from {0,1, ...,335}.

In this application, the synchronization signal identifiers may be used for distinguishing between different terminal devices that send synchronization information. Further, because the first terminal device may send first synchronization information through a plurality of transmit beams, the first synchronization information may further include a first index, and the first index is used for distinguishing between different beams of the first terminal device. Refer to FIG. 4. Different beams of the terminal device are distinguished by using an index.

The following describes a specific carrying manner of the index.

In this application, available resources of a sidelink synchronization signal index (SL-SSB index) include: a resource carried in a PSBCH DMRS sequence, reserved bits (reservedBits) carried in the payload of the SL-SSB, and a resource $(N_{ID,1}^{SL})$ carried in the SL-SSS sequence.

The index is carried, for sending, in synchronization information in a form of a reference signal sequence.

A formula of the reference signal sequence r(m) is:

$$r(m) = \frac{1}{\sqrt{2}}\big(1 - 2c(2m)\big) + j\frac{1}{\sqrt{2}}\big(1 - 2c(2m + 1)\big)$$

*c(n)* is a pseudo random sequence, and is determined according to the following formulas:

$$c(n) = \big(x_1(n + N_C) + x_2(n + N_C)\big)\mathrm{mod}\ 2,$$

$$x_1(n + 31) = \big(x_1(n + 3) + x_1(n)\big)\mathrm{mod}\ 2,$$

$$x_2(n + 31) = \big(x_2(n + 3) + x_2(n + 2) + x_2(n + 1) + x_2(n)\big)mod\ 2$$

$N_c$ = 1600. $x_1(n)$ and $x_2(n)$ are two m sequences. 31 initial values of $x_1(n)$ are $x_1(0) = 1$, and $x_1(n) = 0$, where $n$ = 1,2, ...,30. 31 initial values of $x_2(n)$ are determined by $c_{\mathrm{init}} = \sum_{i=0}^{30} x_2(i) \cdot 2^i$ .

To indicate an SL-SSB index, a setting manner of $c_{\mathrm{init}}$ of $x_2(n)$ is as follows:

$$c_{init} = f(i_{SL-SSB-Index}, N_{ID}^{SL})$$

A possible manner is as follows:

$$f(i_{SL-SSB-Index}, N_{ID}^{SL})$$
$$= 2^a(i_{SL-SSB-Index} + 1)(\lfloor N_{ID}^{SL}/4\rfloor + 1) + 2^b(i_{SL-SSB-Index} + 1)$$
$$+ c(N_{ID}^{SL}\ mod\ 4)$$

$(a,b,c) \in \{(11, 6, 1), (11, 6, 0), (9, 4, 0), (11, 4, 0)\}$ corresponds to four different expressions. For example, when $(a, b, c)$ = (11, 6, 0),

$$f(i_{SL-SSB-Index}, N_{ID}^{SL}) = 2^{11}(i_{SL-SSB-Index} + 1)(\lfloor N_{ID}^{SL}/4\rfloor + 1) +$$
$$2^6(i_{SL-SSB-Index} + 1).$$

Alternatively,

$$f(i_{SL-SSB-Index}, N_{ID}^{SL}) = 2^a i_{SL-SSB-Index} + 2^b N_{ID}^{SL}$$

$i_{SL\text{-}SSB\text{-}Index}$ is a value of an index.
$(a, b) \in \{(10, 0), (11, 0), (12, 0), (13, 0), (0, 3), (0, 4), (0, 5), (0, 6), (0, 7), (0, 8)\}$ corresponds to 10 different expressions. For example, when $(a, b)$=(11, 0),

$$f(i_{SL-SSB-Index}, N_{ID}^{SL}) = 2^{11} i_{SL-SSB-Index} + N_{ID}^{SL}.$$

It should be noted that, based on different total quantities of beams, in embodiments of this application, a length of the first index may be three bits, four bits, five bits, or six bits.
The following describes possible carrying manners based on different index lengths.

1. The SL-SSB index needs to be indicated by three bits in total. Only a three-bit resource of $i_{SL\text{-}SSB\text{-}Index}$ is used.
2. The SL-SSB index needs to be indicated by four bits in total. This may be specifically implemented in the following several manners:

Manner 1: Only a four-bit resource of $i_{SL\text{-}SSB\text{-}Index}$ is used.

Manner 2: A three-bit resource of $i_{SL\text{-}SSB\text{-}Index}$ 的 and a one-bit resource in reservedBits are used.

Manner 3: A three-bit resource of $i_{SL\text{-}SSB\text{-}Index}$ and a one-bit resource in $N_{ID,1}^{SL}$ are used.

3. The SL-SSB index needs to be indicated by five bits in total.

Manner 1: Only a five-bit resource of $i_{SL\text{-}SSB\text{-}Index}$ is used.

Manner 2: A four-bit resource of $i_{SL\text{-}SSB\text{-}Index}$, and a one-bit resource in reservedBits or a one-bit resource in $N_{ID,1}^{SL}$ are used.

Manner 3: A three-bit resource of $i_{SL\text{-}SSB\text{-}Index}$, and a two-bit resource in reservedBits, a two-bit resource in $N_{ID,1}^{SL}$, or a one-bit resource in reservedBits and a one-bit resource in $N_{ID,1}^{SL}$ are used.

4. The SL-SSB index needs to be indicated by six bits in total.

Manner 1: Only a six-bit resource of $i_{SL\text{-}SSB\text{-}Index}$ is used.

Manner 2: A five-bit resource of $i_{SL\text{-}SSB\text{-}Index}$, and a one-bit resource in reservedBits or a one-bit resource in $N_{ID,1}^{SL}$ are used.

Manner 3: A four-bit resource of $i_{SL\text{-}SSB\text{-}Index}$, and a two-bit resource in reservedBits, a two-bit resource in $N_{ID,1}^{SL}$, or a one-bit resource in reservedBits and a one-bit resource in $N_{ID,1}^{SL}$ are used.

A receive end device may obtain the SSB index by using one or more of the PSBCH DMRS sequence, the SL-SSS sequence, and reservedBits.

Considering that reservedBits may indicate the special SL-SSID configuration, a joint design for the SL-SSB index and the special SL-SSID configuration may be performed.

In a possible implementation, the special SL-SSID configuration is indicated in Manner 2. In other words, one bit in $N_{ID,2}^{SL}$, one bit in $N_{ID,1}^{SL}$, and one bit in reservedBits indicate the SL-SSID special configuration, and the first identifier range is {0,1, ...,167}.

On this basis, the index includes a first sequence and a first bit. The first sequence is an initial value of a pseudo random sequence of a synchronization signal demodulation reference signal (PSBCH DMRS), and a size of the first sequence is three bits. In addition, the first bit is a reserved bit (reservedBits) in a synchronization signal payload, occupies one bit, and a value of the first bit is zero or one. A PSBCH in the SL-SSB includes the PSBCH DMRS and a PSBCH payload. One part of the SL-SSB index is determined by the initial value (three bits) of the pseudo random sequence of the PSBCH DMRS, and the other part is determined by the other bit of two bits in reservedBits in the PSBCH payload.

It may be learned that there are a plurality of possible implementations of the first identifier range of the first synchronization signal identifier. The first identifier range is associated with a carrying manner of the first index and a carrying manner of a priority of a synchronization signal. It may be understood that a larger first identifier range used for distinguishing the terminal devices indicates a lower probability that the value of the first synchronization signal identifier and the value of the second synchronization signal identifier that are determined based on random rotation are the same, and a higher success rate of determining the priority of the synchronization signal in this communication method. Certainly, if the value of the first synchronization signal identifier is exactly the same as the value of the second synchronization signal identifier, the terminal devices may alternatively further distinguish priorities of the terminal devices in another manner. A specific implementation is not limited.

The following describes, with reference to specific examples, a communication method provided in this application. Refer to FIG. 5 to FIG. 7.

In an actual application scenario, there are usually a plurality of terminal devices. In an initial phase, the terminal devices separately send synchronization signals. A first terminal device receives a plurality of second synchronization signals separately sent by a plurality of second terminal devices. A priority of each of the plurality of second synchronization signals is lower than a priority of a first synchronization signal. Because the first terminal device determines that a priority of a first synchronization signal identifier is higher than a priority of a second synchronization signal identifier, in this embodiment, the first terminal device may be referred to as a coordination device. The first terminal device and all the second terminal devices form a coordination group. The coordination device preferentially sends synchronization information, and may further indicate any two of all the second terminal devices in the coordination group to perform beam training.

For example, refer to FIG. 5. UE-O in FIG. 5 corresponds to the first terminal device in the embodiment corresponding to FIG. 2. UE-A, UE-B, and UE-C in FIG. 5 correspond to the second terminal devices in the embodiment corresponding to FIG. 2.

A first synchronization signal sent by the UE-O includes a first synchronization signal identifier, and a value of the first synchronization signal identifier is one. A second synchronization signal sent by the UE-A includes a second synchronization signal identifier, and a value of the second synchronization signal identifier is four. A third synchronization signal sent by the UE-B includes a third synchronization signal identifier, and a value of the third synchronization signal identifier is 15. A fourth synchronization signal sent by the UE-C includes a fourth synchronization signal identifier, and a value of the fourth synchronization signal identifier is eight.

It is assumed that a smaller value of a synchronization signal identifier indicates a higher priority. In the initial phase, the UE-O receives synchronization signals sent by the UE-A, the UE-B, and the UE-C, and determines that a priority of the first synchronization signal identifier is higher than a priority of the second synchronization signal identifier, higher than a priority of the third synchronization signal identifier, and higher than a priority of the fourth synchronization signal identifier. Therefore, in this embodiment, the UE-O is coordination UE.

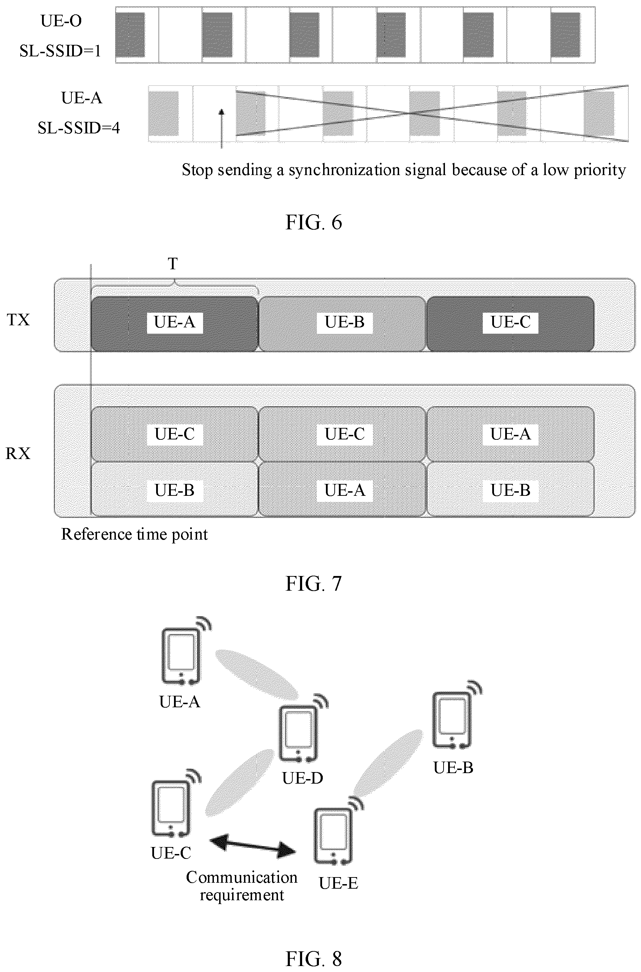

Refer to FIG. 6. The UE-A receives synchronization signals sent by the UE-O, the UE-B, and the UE-C, and determines that the priority of the second synchronization signal identifier is lower than that of the UE-O, and the UE-A stops sending the synchronization signal. Similarly, the UE-B and the UE-C also stop sending the synchronization signals.

The coordination UE, namely, the UE-O, is preferentially used as a transmit end to send the synchronization signal, and the UE-A, the UE-B, and the UE-C separately receive the first synchronization signal sent by the UE-O, to complete beam training with the UE-O.

Further, the UE-O may further send scheduling information, to indicate the UE-A, the UE-B, and the UE-C to perform beam training in pairs. There are a plurality of manners of indicating a sequence of sending the synchronization signals by the plurality of terminal devices. Optionally, a sending sequence is implicitly indicated based on a position of an SL-SSID at the scheduling information; or a UE sequence is explicitly indicated by using an additional field. For example, refer to FIG. 7. The scheduling information indicates t to send the synchronization signals in a sequence of the UE-A, the UE-B, and the UE-C.

It may be understood that, when the UE-A is a transmit end (TX) to send the synchronization signal, the UE-C and the UE-B are used as receive ends (RXs) to receive the synchronization signal, and do not send synchronization signals. After the UE-B and the UE-C separately perform beam training with the UE-A, similarly, the UE-B is used as a transmit end to send the synchronization signal, and the UE-C and the UE-A are used as receive ends to separately perform beam training with the UE-B. Finally, the UE-C is used as a transmit end to send the synchronization signal, and the UE-A and the UE-B are used as receive ends to separately perform beam training with the UE-C.

The foregoing describes a process in which the coordination UE is determined in the coordination group and schedules members of the coordination group to perform beam training in pairs. Considering that a terminal device in the coordination group may need to communicate with a terminal device outside the coordination group in an actual application, the following describes this scenario in detail.

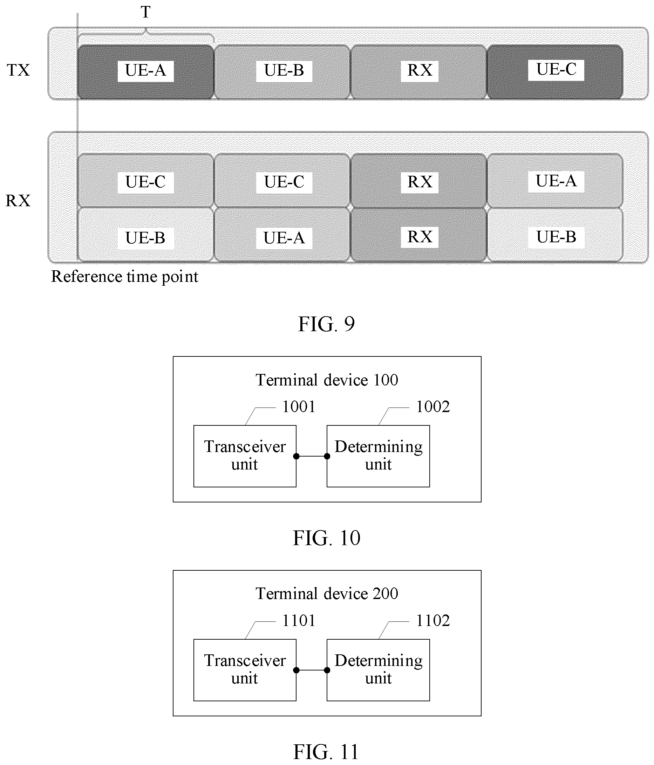

Refer to FIG. 8 and FIG. 9. UE-D and the UE-B are coordination UE. According to descriptions of the foregoing method, beam matching may be performed on UE-A, UE-C, and the UE-D in pairs, and beam matching may be performed on the UE-B and UE-E. However, if the UE-E and the UE-C have a communication requirement, the requirement cannot be met. To resolve this problem, when the coordination UE performs scheduling, it may be considered that all UE does not perform sending in some time-frequency resource configurations. In this case, the UE receives beams of other possible surrounding UE, so that beam matching of the UE is not limited in one coordination UE.

Refer to FIG. 9. At a time-frequency resource position indicated by RX, all terminal devices do not send synchronization signals, but receive a synchronization signal. In this case, a synchronization signal sent by the terminal device outside the coordination group may be received. For example, the UE-C may receive a synchronization signal sent by the UE-E. The coordination UE may indicate, in the scheduling information, a time-frequency resource on which the second terminal device does not send a synchronization signal, namely, a position of RX. An indication manner includes implicit indication or explicit indication. Implicit indication of a position of an RX periodicity indicates that a sending sequence is determined based on the position of the RX periodicity arranged in the scheduling information. Explicit indication of the position of the RX periodicity indicates that the additional field is used, to indicate the UE sequence. In addition, the coordination UE may separately configure a periodicity T and a periodicity repetition quantity for the position of RX on which no synchronization signal is sent.

It may be understood that, because the new synchronization signal is received, the UE-C may determine coordination UE again by comparing priorities of synchronization signals according to the communication method provided in embodiments of this application, so that the coordination group is updated. According to the communication method provided in embodiments, an application scope of the solution is extended.

The foregoing describes the communication method provided in this application. The following describes a terminal device that implements the communication method. FIG. 10 and FIG. 11 are diagrams of embodiments of the terminal device according to an embodiment of this application.

Refer to FIG. 10. The terminal device 100 used as a transmit end device includes: This application provides a terminal device, including a transceiver unit 1001, configured to receive a second synchronization signal, where the second synchronization signal is information that is sent by a second terminal device and that is used for beam training, the second synchronization signal includes a second synchronization signal identifier, and the second synchronization signal identifier indicates a priority of the second synchronization signal, and a determining unit 1002, configured to determine that a priority of a first synchronization signal is higher than the priority of the second synchronization signal, where the first synchronization signal is information that is sent by a first terminal device and that is used for beam training, and the first synchronization signal includes the first synchronization signal identifier. The transceiver unit 1001 is further configured to send the first synchronization signal, where the first synchronization signal includes a first synchronization signal identifier, and the first synchronization signal identifier indicates the priority of the first synchronization signal.

In a possible implementation, the transceiver unit 1001 is further configured to send scheduling information, where the scheduling information indicates any two of at least two second terminal devices to perform beam training.

In a possible implementation, the scheduling information indicates a time-frequency resource on which the second terminal device sends a synchronization signal.

In a possible implementation, the scheduling information further indicates a time-frequency resource on which none of at least one second terminal device sends a synchronization signal.

In a possible implementation, the determining unit 1002 is further configured to determine one or more of the following parameters: duration of sending the first synchronization signal, a quantity of beams, duration of one beam sweeping, a quantity of repeated beam sweeping times, and total duration of beam sweeping. The transceiver unit 1001 is specifically configured to send the synchronization signal based on the parameter.

In a possible implementation, the first synchronization signal further includes a first index, and the first index indicates index information beam direction corresponding to the first synchronization signal.

In a possible implementation, the first index includes a first sequence and a first bit, the first sequence is an initial value of a pseudo random sequence of a synchronization signal demodulation reference signal, a size of the first sequence is three bits, the first bit is a reserved bit in a synchronization signal payload, and a value of the first bit is zero or one.

According to the terminal device provided in this embodiment of this application, when the determining unit 1002 determines that the priority of the first synchronization signal is higher than the priority of the second synchronization signal, the transceiver unit 1001 sends the first synchronization signal for beam training. In this case, the terminal device 100 is used as a transmit end to perform the beam training, so that sidelink beam training is implemented in an orderly manner.

Refer to FIG. 11. A terminal device 200 used as a receive end device includes: a transceiver unit 1101, configured to receive a first synchronization signal, where the first synchronization signal is information that is sent by a first terminal device and that is used for beam training, the first synchronization signal includes a first synchronization signal identifier, and the first synchronization signal identifier indicates a priority of the first synchronization signal; and a determining unit 1102, configured to determine that the priority of the first synchronization signal is higher than a priority of a second synchronization signal, where the second synchronization signal is information that is sent by a second terminal device and that is used for beam training, the second synchronization signal includes a second synchronization signal identifier, and the second synchronization signal identifier indicates the priority of the second synchronization signal. The transceiver unit 1101 is further configured to stop sending a synchronization signal.

In a possible implementation, the transceiver unit 1101 is further configured to receive scheduling information, where scheduling information indicates the second terminal device to perform beam training.

In a possible implementation, the scheduling information indicates a time-frequency resource on which the second terminal device sends a synchronization signal.

In a possible implementation, the scheduling information further indicates a time-frequency resource on which the second terminal device does not send a synchronization signal.

In a possible implementation, the determining unit 1102 is further configured to determine one or more of the following parameters: duration of sending the second synchronization signal, a quantity of beams, duration of one beam sweeping, a quantity of repeated beam sweeping times, and total duration of beam sweeping. The method further includes: The second terminal device sends the second synchronization signal based on the parameter.

In a possible implementation, the second synchronization signal further includes a second index, and the second index indicates beam direction index information corresponding to the second synchronization signal.

In a possible implementation, the second index includes a second sequence and a second bit, the second sequence is an initial value of a pseudo random sequence of a synchronization signal demodulation reference signal, a size of the second sequence is three bits, the second bit is a reserved bit in a synchronization signal payload, and a value of the second bit is zero or one.

According to the terminal device provided in this embodiment of this application, the transceiver unit 1101 receives the first synchronization signal, and when the determining unit 1102 determines that the priority of the first synchronization signal is higher than the priority of the second synchronization signal, the transceiver unit 1101 stops sending the second synchronization signal. Therefore, the terminal device 200 is used as a receive end to perform beam training, so that sidelink beam training is implemented in an orderly manner.

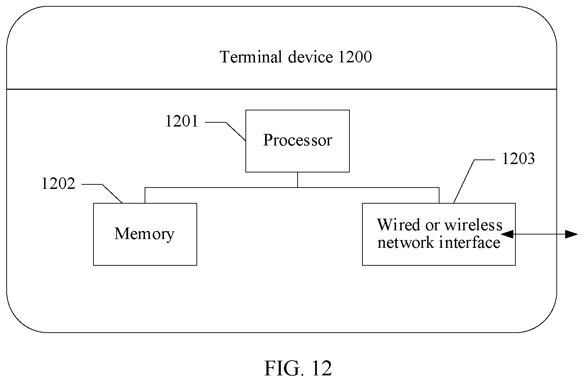

FIG. 12 is a diagram of another embodiment of a terminal device according to an embodiment of this application.

A specific device form of the terminal device 1200 provided in this embodiment is not limited in this embodiment of this application.

The terminal device 1200 may be configured to perform the method in the foregoing embodiments. The terminal device 1200 may be applied to the application scenario shown in FIG. 1. The terminal device 1200 may vary greatly with configuration or performance, and may include one or more processors 1201 and a memory 1202. The memory 1202 stores a program or data.

The memory 1202 may be a volatile memory or a non-volatile memory. Optionally, the processor 1201 is one or more central processing units (central processing units, CPUs), and the CPU may be a single-core CPU, or may be a multi-core CPU. The processor 1201 may communicate with the memory 1202 and execute a set of instructions in the memory 1202 on the terminal device 1200.

The terminal device 1200 further includes one or more wired or wireless network interfaces 1203, for example, an ethernet interface.

Optionally, although not shown in FIG. 12, the terminal device 1200 may further include one or more power supplies and one or more input/output interfaces. The input/output interface may be configured to connect to a display, a mouse, a keyboard, a touchscreen device, a sensor device, or the like. The input/output interface is an optional component, and may exist or may not exist. This is not limited herein.

For a procedure performed by the processor 1201 of the terminal device 1200 in this embodiment, refer to a method procedure described in the foregoing method embodiments. Details are not described herein again.

It may be clearly understood by a person skilled in the art that, for convenient and brief description, for a detailed working process of the foregoing system, apparatus, and unit, refer to a corresponding process in the foregoing method embodiments. Details are not described herein again.

In the several embodiments provided in this application, the disclosed systems, apparatuses, and methods may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in the form of hardware, or may be implemented in the form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional art, or all or some of the technical solutions may be implemented in the form of a software product. The computer software product is stored in a storage medium and includes several instructions for enabling a computer device (which may be a personal computer, a server, or a network device) to perform all or some of the steps of the methods described in embodiments of this application. The foregoing storage medium includes: any medium that can store program code, a USB flash drive, a removable hard disk, a read-only memory (read-only memory, ROM), a random access memory (random access memory, RAM), a magnetic disk, an optical disc, and the like.

In conclusion, the foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

Claims

1.  A communication method, comprising:

    receiving, by a first terminal device, a second synchronization signal, wherein the second synchronization signal is information that is sent by a second terminal device and that is used for beam training, the second synchronization signal comprises a second synchronization signal identifier, and the second synchronization signal identifier indicates a priority of the second synchronization signal;
    determining, by the first terminal device, that a priority of a first synchronization signal is higher than the priority of the second synchronization signal, wherein the first synchronization signal is information that is sent by the first terminal device and that is used for beam training; and
    sending, by the first terminal device, the first synchronization signal, wherein the first synchronization signal comprises a first synchronization signal identifier, and the first synchronization signal identifier indicates the priority of the first synchronization signal.

2.  The method according to claim **1,** wherein the method further comprises:
    sending, by the first terminal device, scheduling information, wherein the scheduling information indicates any two of at least two second terminal devices to perform beam training.

3.  The method according to claim 2, wherein
    the scheduling information indicates a time-frequency resource on which the second terminal device sends a synchronization signal.

4.  The method according to claim 3, wherein
    the scheduling information further indicates a time-frequency resource on which the second terminal device does not send a synchronization signal.

5.  The method according to any one of claims 1 to 4, wherein the method further comprises:
    determining, by the first terminal device, one or more of the following parameters:

    duration of sending the first synchronization signal;
    a quantity of beams;
    duration of one beam sweeping;
    a quantity of repeated beam sweeping times; and
    total duration of beam sweeping; and
    the sending, by the first terminal device, the first synchronization signal comprises:
    sending, by the first terminal device, the synchronization signal based on the parameter.

6.  The method according to any one of claims 1 to 5, wherein
    the first synchronization signal further comprises a first index, and the first index indicates a beam direction corresponding to the first synchronization signal.

7.  The method according to claim 6, wherein
    the first index comprises a first sequence and a first bit, the first sequence is an initial value of a pseudo random sequence of a synchronization signal demodulation reference signal, a size of the first sequence is three bits, the first bit is a reserved bit in a synchronization signal payload, and a value of the first bit is zero or one.

8.  A communication method, comprising:

    receiving, by a second terminal device, a first synchronization signal, wherein the first synchronization signal is information that is sent by a first terminal device and that is used for beam training, the first synchronization signal comprises a first synchronization signal identifier, and the first synchronization signal identifier indicates a priority of the first synchronization signal;
    determining, by the second terminal device, that the priority of the first synchronization signal is higher than a priority of a second synchronization signal, wherein the second synchronization signal is information that is sent by the second terminal device and that is used for beam training, the second synchronization signal comprises a second synchronization signal identifier, and the second synchronization signal identifier indicates the priority of the second synchronization signal; and

stopping, by the second terminal device, sending the synchronization signal.

9. The method according to claim 8, wherein
the method further comprises:
receiving, by the second terminal device, scheduling information, wherein the scheduling information indicates the second terminal device to perform beam training.

10. The method according to claim 9, wherein
the scheduling information indicates a time-frequency resource on which the second terminal device sends a synchronization signal.

11. The method according to claim 10, wherein
the scheduling information further indicates a time-frequency resource on which the second terminal device does not send a synchronization signal.

12. The method according to any one of claims 8 to 11, wherein the method further comprises:
determining, by the second terminal device, one or more of the following parameters:

duration of sending the second synchronization signal;
a quantity of beams;
duration of one beam sweeping;
a quantity of repeated beam sweeping times; and
total duration of beam sweeping; and
the method further comprises:
sending, by the second terminal device, the second synchronization signal based on the parameter.

13. The method according to any one of claims 8 to 12, wherein
the second synchronization signal further comprises a second index, and the second index indicates a beam direction corresponding to the second synchronization signal.

14. The method according to claim 13, wherein
the second index comprises a second sequence and a second bit, the second sequence is an initial value of a pseudo random sequence of a synchronization signal demodulation reference signal, a size of the second sequence is three bits, the second bit is a reserved bit in a synchronization signal payload, and a value of the second bit is zero or one.

15. A communication device, comprising:

a transceiver unit, configured to receive a second synchronization signal, wherein the second synchronization signal is information that is sent by a second terminal device and that is used for beam training, the second synchronization signal comprises a second synchronization signal identifier, and the second synchronization signal identifier indicates a priority of the second synchronization signal; and
a determining unit, configured to determine that a priority of a first synchronization signal is higher than the priority of the second synchronization signal, wherein the first synchronization signal is information sent for beam training, and
the transceiver unit is further configured to send the first synchronization signal, wherein the first synchronization signal comprises a first synchronization signal identifier, and the first synchronization signal identifier indicates the priority of the first synchronization signal.

16. The communication device according to claim 15, wherein the transceiver unit is further configured to:
send scheduling information, wherein the scheduling information indicates any two of at least two second terminal devices to perform beam training.

17. A communication device, comprising:

a transceiver unit, configured to receive a first synchronization signal, wherein the first synchronization signal is information that is sent by a first terminal device and that is used for beam training, the first synchronization signal comprises a first synchronization signal identifier, and the first synchronization signal identifier indicates a priority of the first synchronization signal; and

a determining unit, configured to determine that the priority of the first synchronization signal is higher than a priority of a second synchronization signal, wherein the second synchronization signal is information that is sent by a second terminal device and that is used for beam training, the second synchronization signal comprises a second synchronization signal identifier, and the second synchronization signal identifier indicates the priority of the second synchronization signal, wherein
the transceiver unit is further configured to stop sending a synchronization signal.

18. The communication device according to claim 17, wherein the transceiver unit is further configured to:
receive scheduling information, wherein the scheduling information indicates the second terminal device to perform beam training.

19. A communication device, comprising:

a memory, configured to store executable instructions, and
a processor, configured to invoke and run the executable instructions in the memory, to perform the method according to any one of claims 1 to 14.

20. A computer program product, comprising: computer-readable instructions, wherein when the computer-readable instructions are run on a computer, the computer is enabled to perform the method according to any one of claims 1 to 14.

21. A computer-readable storage medium, wherein the computer-readable storage medium stores instructions; and when the instructions are run on a computer, the computer is enabled to perform the method according to any one of claims 1 to 14.

22. A communication system, comprising a first terminal device and a second terminal device, wherein the first terminal device is configured to perform the method according to any one of claims 1 to 7, and the second terminal device is configured to perform the method according to any one of claims 8 to 14.

FIG. 1

FIG. 2

FIG. 3

FIG. 4

FIG. 5

UE-O
SL-SSID=1

UE-A
SL-SSID=4

Stop sending a synchronization signal because of a low priority

FIG. 6

T

TX

UE-A | UE-B | UE-C

RX

| UE-C | UE-C | UE-A |
| UE-B | UE-A | UE-B |

Reference time point

FIG. 7

UE-A

UE-D

UE-B

UE-C

Communication
requirement

UE-E

FIG. 8

TX

T

| UE-A | UE-B | RX | UE-C |

RX

| UE-C | UE-C | RX | UE-A |
| UE-B | UE-A | RX | UE-B |

Reference time point

FIG. 9

Terminal device 100

1001

1002

Transceiver unit

Determining unit

FIG. 10

Terminal device 200

1101

1102

Transceiver unit

Determining unit

FIG. 11

Terminal device 1200

1201 — Processor

1202 — Memory

1203

Wired or wireless network interface

FIG. 12

## INTERNATIONAL SEARCH REPORT

International application No.

**PCT/CN2023/116389**

### A. CLASSIFICATION OF SUBJECT MATTER

H04W56/00(2009.01)i; H04W72/566(2023.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT; 3GPP; IEEE: 车与万物, 侧行链路, 边链路, 同步信号, 波束, 优先级, V2X, SL, SSB, beam, priority

### C. DOCUMENTS CONSIDERED TO BE RELEVANT

| Category* | Citation of document, with indication, where appropriate, of the relevant passages | Relevant to claim No. |
|---|---|---|
| X | CN 115152282 A (NOKIA TECHNOLOGIES OY) 04 October 2022 (2022-10-04) description, paragraphs [0032]-[0136], and figures 1-7 | 1-22 |
| X | CN 114145053 A (QUALCOMM INC.) 04 March 2022 (2022-03-04) description, paragraphs [0072]-[0163], and figures 1-12 | 1-22 |
| A | CN 111726821 A (HUAWEI TECHNOLOGIES CO., LTD.) 29 September 2020 (2020-09-29) entire document | 1-22 |
| A | CN 112689324 A (DATANG MOBILE COMMUNICATIONS EQUIPMENT CO., LTD.) 20 April 2021 (2021-04-20) entire document | 1-22 |
| A | WO 2020033562 A1 (IDAC HOLDINGS, INC.) 13 February 2020 (2020-02-13) entire document | 1-22 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 November 2023** | **21 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/116389**

| Patent document cited in search report | | | Publication date (day/month/year) | Patent family member(s) | | | Publication date (day/month/year) |
|---|---|---|---|---|---|---|---|
| CN | 115152282 | A | 04 October 2022 | WO | 2021162709 | A1 | 19 August 2021 |
| | | | | IN | 202247051527 | A | 16 September 2022 |
| | | | | EP | 4104546 | A1 | 21 December 2022 |
| CN | 114145053 | A | 04 March 2022 | KR | 20220041832 | A | 01 April 2022 |
| | | | | WO | 2021022017 | A1 | 04 February 2021 |
| | | | | EP | 4005302 | A1 | 01 June 2022 |
| | | | | BR | 112022000911 | A2 | 08 March 2022 |
| | | | | US | 2021037493 | A1 | 04 February 2021 |
| | | | | US | 11696241 | B2 | 04 July 2023 |
| CN | 111726821 | A | 29 September 2020 | EP | 3934329 | A1 | 05 January 2022 |
| | | | | US | 2022007315 | A1 | 06 January 2022 |
| | | | | WO | 2020186946 | A1 | 24 September 2020 |
| | | | | CN | 111726821 | B | 26 April 2022 |
| | | | | EP | 3934329 | A4 | 04 May 2022 |
| CN | 112689324 | A | 20 April 2021 | CN | 112689324 | B | 28 June 2022 |
| WO | 2020033562 | A1 | 13 February 2020 | None | | | |

Form PCT/ISA/210 (patent family annex) (July 2022)

**EP 4 611 445 A1**

**Patent documents cited in the description**

- CN 202211405434